Europäisches Patentamt

European Patent Office

Office européen des brevets

(19)

(11) Veröffentlichungsnummer: **0 051 692**
**B1**

(12) **EUROPÄISCHE PATENTSCHRIFT**

(45) Veröffentlichungstag der Patentschrift:
**22.08.84**

(21) Anmeldenummer: **80106954.3**

(22) Anmeldetag: **11.11.80**

(51) Int. Cl.³: **B 65 G 17/42,** F 16 G 1/00

(54) **Zuggurt mit einvulkanisierten Stahlseilarmierungen.**

(43) Veröffentlichungstag der Anmeldung:
**19.05.82 Patentblatt 82/20**

(45) Bekanntmachung des Hinweises auf die Patenterteilung:
**22.08.84 Patentblatt 84/34**

(84) Benannte Vertragsstaaten:
**DE FR IT**

(56) Entgegenhaltungen:
**DE - A - 1 781 096**
**DE - B - 1 756 775**
**DE - B - 2 128 932**
**DE - C - 350 201**
**DE - U - 1 985 975**

(73) Patentinhaber: **CARL SCHENCK AG,**
**Landwehrstrasse 55 Postfach 40 18, D-6100 Darmstadt**
**(DE)**

(72) Erfinder: **Kneifel, Heinz, Sudetenstrasse 9,**
**D-6101 Mühltal 3 (DE)**

(74) Vertreter: **Dallhammer, Herbert, Dipl.-Ing., Carl Schenck**
**AG Patentabteilung Postfach 4018, D-6100 Darmstadt**
**(DE)**

## Beschreibung

Die Erfindung betrifft einen Zuggurt mit einvulkanisierten Stahlseilarmierungen für Senkrechtförderer mit die Stahlseilarmierung umfassenden U-förmigen Laschen, die zum eine Teil im Zuggurt einvulkanisiert sind und deren freie Schenkel, die an den Schmalseiten des Zuggurtes austreten als Mitnehmer für Fördergefässe ausgebildet sind.

Durch die DE-PS Nr. 1756775 ist eine Befestigung von Förderbehältern an Zuggurten mittels Querträgern insbesondere bei Stetigförderern bekannt geworden, die sich dadurch auszeichnet, dass jeder Querträger aus einer Lage von in einer elastischen Masse eingebetteten, mit Abstand nebeneinanderliegenden, elastischen Einzelstäben gesteht. Mit derartigen Mitnehmern ausgestattete Zuggurte bedingen beim Einsatz der Zuggurte zum Antrieb der Stetigförderer eine Laufseite des Zuggurtes und eine Tragseite des Zuggurtes. Derartige Stetigförderer werden jedoch beispielsweise zur Vorspannung des Zuggurtes über gegenläufige Kurven geführt. Damit wird die Tragseite des Gurtes zur Lauffläche und es entstehen durch die Anordnung der Mitnehmer nicht zu vermeidende Zusatzbelastungen, die durch die Erhöhung der Mitnehmer hervorgerufen werden und wodurch die Lebensdauer der Zuggurte negativ beeinflusst wird. Auch ist ein Verschleiss der Umlenkrollen oder deren Lagerung nicht ausgeschlossen.

Durch die DE-B Nr. 2128932 ist ein Zuggurt der eingangs genannten Gattung bekannt geworden, bei dem jedoch zufolge der nicht zu vernachlässigenden Breite der Mitnehmer bei Umführungen eine Zusatzbelastung der Gurte nicht zu vermeiden ist, was zu Verschleiss führt und somit die Lebensdauer herabsetzt. Ausgehend hiervon liegt der Erfindung die Aufgabe, zugrunde, Zuggurte für Stetigförderer in Vorschlag zu bringen, bei denen auch bei daran angeordneten Mitnehmern für Fördergefässe eine beidseitige Verwendung des Zuggurtes erreicht wird. Diese Aufgabe wird erfindungsgemäss dadurch gelöst, dass jede U-förmige Lasche aus mehreren im Abstand übereinander angeordneten Rundstäben besteht, die über die Breite der Lasche mittels weiterer biegeelastischer Stäbe verbunden sind, so dass ein aus Gitterstäben bestehendes U-förmiges Gitterwerk entsteht, wobei die freien Schenkel dieser U-förmigen Lasche als Aufnahme aus Vollmaterial bestehen und das U-förmige Gitterwerk abschliessen, und dass die U-förmigen Laschen insgesamt vorvulkanisiert sind. Durch Zusammenfassen der erfindungsgemässen Gitterlasche an den Schenkelenden in einen aus einer Materialfläche bestehenden Fuss wird beim Verbinden dieser Laschen mit Fördergefässen eine gleichmässige Kraftverteilung auf die Gitterlasche erreicht. Durch das aus Gitterstäben bestehende U-förmige Gitterwerk wird einmal erreicht, dass die über diese Laschen auf den Zuggurt einwirkenden Kräfte symmetrisch zur Nullachse des auf Biegung beanspruchten Zuggurtes bei Umlenkungen angreifen und zum anderen, dass beim Umlaufen eine gewisse Elastizität durch das Gitterwerk innerhalb der U-förmigen Lasche vorhanden ist.

In Ausgestaltung des Erfindungsgegenstandes wird vorgeschlagen, dass die tragenden Bestandteile der U-förmigen Lasche aus Eisen bestehen. Anstelle dieser Materialwahl kann gemäss der Erfindung für die tragenden Bestandteile der U-förmigen Laschen Kunststoff, vornehmlich Polytrifluorchloräthylen treten.

In noch weiterer Ausgestaltung wird vorgeschlagen, dass diese Laschen vorvulkanisiert sind.

In noch weiterer Ausgestaltung des Erfindungsgegenstandes wird vorgeschlagen, dass die U-förmigen Laschen in den aus dem Gurt herausragenden Schenkeln Durchgangsbohrungen besitzen. Anhand der Zeichnung wird die Erfindung näher erläutert. Es zeigen

Fig. 1 einen Schnitt durch einen erfindungsgemässen Zuggurt mit einer U-förmigen Lasche aus Vollmaterial,

Fig. 2 eine Draufsicht auf einen erfindungsgemässen Gurt mit einer U-förmigen Lasche aus Gitterwerk.

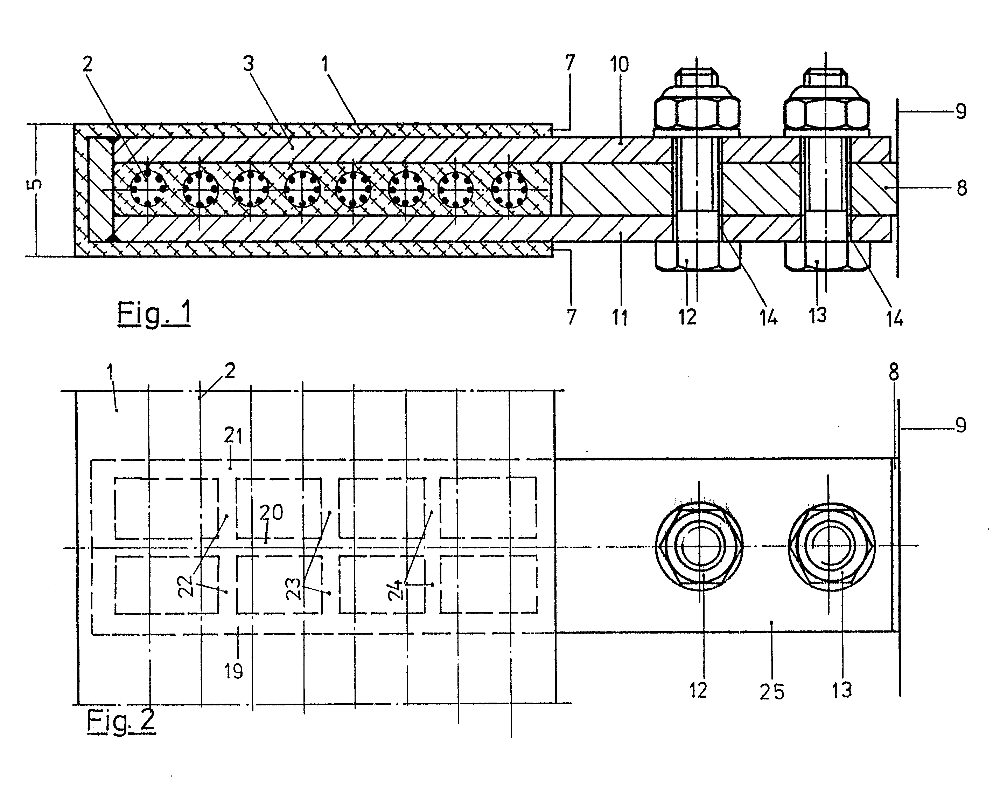

Ein Zuggurt 1, beispielsweise bestehend aus vulkanisiertem Gummi, trägt eine Reihe von Strahlseilen, die in den Zuggurt 1 einvulkanisiert sind. Zusätzlich ist um diese Stahlseile 2 eine U-förmige Lasche 3 aus Vollmaterial angeordnet, wobei auch diese U-förmige Lasche im Zuggurt 1 einvulkanisiert ist, so dass die Gesamtdicke 5 des Zuggurtes 1 durch die U-förmige Lasche nicht erhöht wird. An einer Stirnseite 7 des Zuggurtes 1 tritt die U-förmige Lasche 3 aus und nimmt eine Halterung 8 eines nur schematisch dargestellten Fördergefässes 9 zwischen ihren Schenkeln 10, 11 auf. Die in Fig. 1 dargestellte U-förmige Lasche ist ausserhalb des Zuggurtes 1 nicht vulkanisiert. Es ist jedoch im Rahmen der Erfindung eine derartige erfindungsgemässe U-förmige Lasche auch im Bereich ihrer Schenkel 10, 11 durch Vorvulkanisation gegenüber aggressiven Dämpfen oder Stoffen zu schützen.

Die Schenkel 10, 11 der U-förmigen Lasche 3 sind mit der Halterung 8 des Fördergefässes 9 mittels Schrauben 12, 13 verbunden. Hierzu tragen die Schenkel 10, 11 Durchgangslöcher 14.

In Fig. 2 ist eine Ausgestaltung der U-förmigen Lasche als Gitterwerk dargestellt; hierbei umschliesst eine Mehrzahl von Stäben 19, 20, 21 die im Zuggurt 1 angeordneten Stahlseile 2 links und rechts. Die Stäbe 19, 20, 21 sind durch weitere biegeelastische Zusatzstäbe 22, 23, 24 miteinander verbunden, so dass insgesamt ein aus Gitterstäben bestehendes U-förmiges Gitterwerk entsteht, welches in einer Aufnahme 25 zusammengefasst ist. Diese Aufnahme 25 ist einer der beiden in Fig. 1 mit 10 und 11 bezeichneten Schenkel, und zwischen zweien derartiger Aufnahmen 25 ist das Fördergefäss 9 mit seiner Halterung 8 mittels Schrauben 12, 13 befestigt. Das in Fig. 2 dargestellte Gitterwerk kann entweder aus Stahl oder Kunststoff gebildet sein, welches ebenfalls bei Anwendung in aggressiver Atmosphäre zusätzlich durch eine Vorvulkanisation gegenüber dieser Atmosphäre geschützt ist.

## Patentansprüche

1. Zuggurt mit einvulkanisierten Stahlseilarmierungen für Senkrechtförderer mit die Stahlseilarmierung (2) umfassenden U-förmigen Laschen (3), die zum einen Teil im Zuggurt (1) einvulkanisiert sind und deren freie Schenkel (10, 11), die an den Schmalseiten des Zuggurtes (1) austreten als Mitnehmer für Fördergefässe (9) ausgebildet sind, dadurch gekennzeichnet, dass jede U-förmige Lasche (3) aus mehreren im Abstand übereinander angeordneten Rundstäben (19, 20, 21) besteht, die über die Breite der Lasche mittels weiterer biegeelastischer Stäbe (22, 23, 24) verbunden sind, so dass ein aus Gitterstäben bestehendes U-förmiges Gitterwerk entsteht, wobei die freien Schenkel (10, 11) dieser U-förmigen Lasche (3) als Aufnahme (25) aus Vollmaterial bestehen und das U-förmige Gitterwerk abschliessen, und dass die U-förmigen Laschen (3) insgesamt vorvulkanisiert sind.

2. Zuggurt (1) nach Anspruch 1, dadurch gekennzeichnet, dass die tragenden Bestandteile der U-förmigen Lasche (3) aus Eisen bestehen.

3. Zuggurt (1) nach Anspruch 1, dadurch gekennzeichnet, dass die tragenden Bestandteile der U-förmigen Laschen (3) aus Kunststoff vornehmlich Polytrifluorchloräthylen bestehen.

4. Zuggurt (1) nach einem oder mehreren der vorhergehenden Ansprüche, dadurch gekennzeichnet, dass die U-förmigen Laschen (3) in den aus dem Gurt herausragenden Schenkeln (10, 11) Durchgangsbohrungen (14) besitzen.

## Revendications

1. Courroie de traction à armatures en câbles d'acier vulcanisées à l'intérieur et destinée à des convoyeurs élévateurs verticaux, comprenant des attaches en U (3) entourant les armatures en câbles d'acier (2), attaches qui sont vulcanisées sur une partie à l'intérieur de la courroie de traction (1) et dont les branches libres (10, 11) qui font saillies sur les côtés étroits de la courroie de traction (1) sont constituées sous forme de dispositifs d'entraînement pour des récipients (9) du convoyeur, caractérisée en ce que chaque attache en U (3) est constituée par plusieurs barres rondes (19, 20, 21) disposées à une certaine distance les unes des autres, qui sont reliées sur la largeur de l'attache au moyen d'autres barres élastiques en flexion (22, 23, 24), de manière que l'on obtienne un treillis en U constitué par des barres de treillis, les branches libres (10, 11) de cette attache en U (3) qui servent d'éléments de fixation (25) étant constituées en un matériau plein et renfermant le treillis en U, et en ce que les attaches en U (3) sont préalablement vulcanisées dans leur ensemble.

2. Courroie de traction (1) selon la revendication 1, caractérisée en ce que les composants porteurs de l'attache en U (3) sont constituées en fer.

3. Courroie de traction (1) selon la revendication 1, caractérisée en ce que les composants porteurs des attaches en U (3) sont constitués en matière synthétique et de préférence en polytrifluorochloréthylène.

4. Courroie de traction (1) selon une ou plusieurs des revendications précédentes, caractérisée en ce que les attaches en U (3) comprennent des alésages traversants (14) dans leurs branches (10, 11) faisant saillie de la courroie.

## Claims

1. Tension belt with vulcanized-n steel wire reinforcement for vertical conveyors with U-shaped brackets (3) surrounding the steel wire reinforcement (2), part of the brackets being vulcanized in the tension belt and the free arms of the brackets, which emerge at the narrow sides of the tension belt, being constructed as a carrier for conveyor vessels (9), characterised in that each U-shaped bracket (3) comprises a plurality of rods (19, 20, 21) arranged at a spacing from one another and connected across the width of the bracket by means of further elastically bending bars (22, 23, 24), so that there is provided a U-shaped lattice construction comprising lattice bars, the free arms (10, 11) of this U-shaped bracket (3) as a mounting (25) consisting of solid material and closing off the U-shaped lattice construction, and that the U-shaped brackets (3) are pre-vulcanized together.

2. Tension belt according to Claim 1, characterised in that the load-bearing members of the U-shaped bracket (3) consist of iron.

3. Tension belt according to Claim 1, characterised in that the load-bearing members of the U-shaped brackets (3) consist of plastics material especially polytrifluorochloroethylene.

4. Tension belt according to one or more of the preceding Claims, characterised in that the U-shaped brackets (3) have through-holes (14) in the arms (10, 11) projecting out of the belt.

Fig. 1

Fig. 2